# EUROPEAN PATENT SPECIFICATION

(11) **EP 3 365 611 B1**
(45) Date of publication and mention of the grant of the patent: **09.06.2021**
(21) Application number: 15801207.0
(22) Date of filing: 23.10.2015
(51) Int. Cl.: F23G 5/40, F24H 1/22, F28D 7/16, F28D 20/00, F28D 21/00, F24D 11/00, F24D 12/02, F24H 6/00, F24D 5/02, F24H 1/06

(54) **MOBILE INCINERATOR WITH AIR AND WATER HEATING**
MOBILER VERBRENNUNGSOFEN MIT LUFT- UND WASSERERWÄRMUNG
INCINÉRATEUR MOBILE À CHAUFFAGE À AIR ET À EAU

(43) Date of publication of application: 29.08.2018
(73) Proprietor: Inciner8 Ltd, Southport Merseyside PR9 7SN (GB)
(72) Inventor: FERGUSON, Vincent, Southport, PR9 7SN (GB)
(74) Representative: Hutchinson, Thomas Owen
(86) International application number: PCT/GB2015/053193
(87) International publication number: WO 2017/068313

(56) References cited:
- BE-A- 464 480
- US-A1- 2010 186 926

## Description

This invention relates to incinerators, and in particular, but without limitation, to field incinerators, and in particular, but without limitation, to mobile waste to energy conversion systems.

In certain types of humanitarian or military applications, for example in refugee camps, or in forward-operating military positions, it is necessary to provide incineration facilities for the disposal of waste. Incineration offers a convenient, hygienic and cost-effective means of disposing of waste, compared with other solutions, such as landfill. As such, incinerators are often used alongside ad hoc accommodation facilities, such as those found in military forward-operating positions or in refugee camps, field hospitals and the like as they enable the 1 to 5 kg of waste produced per person, per day, to be disposed of conveniently and effectively.

It is known to use incinerators for the disposal of waste and incinerators typically comprise a combustion chamber into which the waste products are placed, which combustion chamber is closed and the waste then burnt. The combustion is typically initiated using a fuel- (e.g. a gas- or diesel-) fired ignitor, but once combustion is underway, due to the configuration of the incinerator and the retention of heat within the combustion chamber, the combustion process can often be self-sustaining subject, of course, to the availability of sufficient fuel and oxygen.

A typical incinerator generally comprises a flue, through which the waste products of combustion, i.e. the flue gases, vented to atmosphere. In many cases, the flue comprises a secondary combustion chamber, which re-heats the flue gases to a temperature at which potentially harmful contaminants in the flue gases are burnt, thereby rendering the flue gases at the outlet of the flue relatively, or completely, harmless.

Burning waste products produces heat, which can be captured to provide heating and/or hot water on site, which is a useful by-product of the process, especially in temperate or cold climates. Capturing of energy from the combustion process can be accomplished by providing a heat exchanger in the flue of the incinerator, which captures waste heat and which rejects it into a heat sink, for example a water supply or into a forced hot air supply. A heat exchanger is necessary to avoid contaminating the air and/or water to be heated by the combustion products themselves - in other words, the heating of the air/water is indirect for reasons that will be readily apparent to the skilled reader.

Known heat recovery systems, albeit for "boilers", rather than "incinerators", are disclosed in: BE464480 [Corbisier, 31 May 1946]; and in US2010/186926 [Vairlaro, 29 July 2010]. Both of these known systems disclose providing heat exchangers and fans associated with the flue of a boiler for heat recovery purposes, but their flue temperatures are typically less than about 250° C.

The temperature within the flue of a typical incinerator is very high, often exceeding 1000 to 1500°C. In order to prevent damage to the heat exchanger, it is necessary, therefore, to continuously supply a cooling fluid, for example air or water, to the heat exchanger to prevent it from overheating. In the case of a water heat exchanger, if the flow of water through it stops, the water within the heat exchanger can rapidly boil, which can lead to the heat exchanger exploding under the pressure of the steam so created. Therefore, in order to operate a heat recovery system on incinerator, it is necessary to have a continuous supply of water to the heat exchanger in order to maintain heat exchanger within acceptable operating temperature parameters.

However, in many ad hoc situations, a continuous supply of cooling water is simply not available. Further, it is not always necessary or desirable to engage the heat recovery system all the time, for example in hot climates where heating and/or hot water may not be necessary continuously. This, therefore, places practical restrictions on the usability of a field incinerator because in known filed incinerators, it is generally necessary to have a continuous supply of cooling water or air at all times the incinerator is in use.

The solution to this problem is to deploy a number of incinerators: some of which having a heat recovery system fitted, and others without. With this arrangement, it is possible to choose which of the incinerators to use at different times in order to obtain hot water only when necessary, i.e. using a heat recovery incinerator at those times; but when heat recovery is not required, using a conventional incinerator (without heat recovery equipment).

That said, this solution is contraindicated in many cases due to the cost of transporting multiple incinerators to forward-operating positions or ad hoc locations and, of course, because of the inefficiencies associated with firing-up and turning-off different incinerators at different times of day.

In particular, an incinerator typically needs to be pre-heated before it can be used, during which pre-heating cycle, it is consuming fuel (a valuable resource) but not actually working as an incinerator. Further, on turning the incinerator off, there is a relatively long lead-time associated with the cool-down procedure, during which time the incinerator is also inoperable.

A further and more practical problem also exists in relation to cyclically turning an incinerator on and off, and that is thermal cycling, which can significantly reduce the duty cycle of an incinerator. In particular, the refractory materials used inside the incinerator are subjected to cyclical thermal expansion and contraction during the firing-up and switching-off procedures, this can significantly reduce the lifespan of an incinerator.

A further possible solution is to provide an incinerator with a heat recovery system that can be physically switched into, or out of, the flue for example, using a baffle/deflector to divert flue gasses into the heat recovery heat exchanger, or to bypass it, respectively. Such systems have been tested, but have been found to be impractical due to frequent failures of the baffle/deflector (which must be able to withstand the high flue temperatures), and the incidence of leakage around the baffle/deflector as it becomes contaminated over time by the combustion products. This known solution is a high-maintenance system, a requirement that is contraindicated where the availability of trained technicians and spare parts is scarce.

Therefore, there are various well-known drawbacks associated with using existing field incinerators and a need therefore exists for an alternative and/or a solution to one or more of the above problems. This invention aims to provide a solution to one or more the above problems, and/or to provide an alternative incineration apparatus.

The invention is set forth in the appended independent claim. Optional or preferred features of the invention are set forth in the appended dependent claims.

The invention differs from known field incinerators fitted with heat recovery systems inasmuch as it comprises two heat exchangers, rather than just a (primary) heat exchanger. The provision of the means for forcing a supply of air through the primary and secondary heat exchangers advantageously enables the primary heat exchanger to be continually cooled by an abundant cooling fluid (ambient air), rather than requiring a continuous supply of water.

Suitably, the primary heat exchanger comprises a hot side through which flue gasses are configured, in use, to pass, and a cold side through which the supply or air is forced.

Suitably, the secondary heat exchanger comprises a hot side though which, in use, the supply of air is forced and a cold side through which, in use, a heat transfer liquid is arranged to pass.

Suitably, the means for forcing the supply of air through the primary and secondary heat exchangers comprises an air blower. Suitably, the air blower is configured to force ambient air into the primary heat exchanger, for example, into an inlet of the cold side thereof.

Suitably, the duct means provides a conduit for the forced air between an outlet of the cold side of the primary heat exchanger and inlet of the hot side of the secondary heat exchanger.

The duct means comprises a diverter valve/baffle/deflector etc. for selectively diverting the supply of forced air towards, or away from, the secondary heat exchanger.

This configuration usefully enables the heat recovery system to be switched on or off at will, that is to say: "on" when the forced air is diverted to the secondary heat exchanger or "off" otherwise. Partial heat recovery may also be possible, for example, by diverting only a selected proportion of the forced air to the secondary heat exchanger.

As the supply of ambient air into the air blower (in one embodiment) is virtually infinite, it is possible to operate the incinerator continuously without the heat recovery system in-use because the supply of forced air can be continuous, thus providing the requisite continuous cooling of the primary heat exchanger, and thereby avoiding the aforementioned problems of heat exchanger overheating. In certain embodiments of the invention, the air blower can be switched off when the heat recovery system is not in use. This is possible because there is no liquid in the primary gas-to-gas heat exchanger, and so the aforementioned problem (associated with the prior art) of the heat exchanger exploding due to boiling of water therein, is obviated.

Suitably, the cold side of the secondary heat exchanger is operatively connected in-series with a closed-loop circuit containing the heat transfer liquid. In certain embodiments of the invention, the heat sink comprises a hot water cylinder through which part of the closed-loop circuit passes, thereby enabling heat from the combustion process (within the combustion chamber) to ultimately be captured in a supply of water to be heated. The hot water cylinder suitably comprises control means for enabling the heated water to be decanted, as desired.

Additionally or alternatively, the heat sink comprises a closed-loop central heating system into which the heat from the combustion process (within the combustion chamber) is ultimately captured by the central heating system.

Additionally or alternatively, the heat sink comprises ambient air, whereby the forced air that has been heated by the combustion chamber is simply exhausted to atmosphere. Additionally or alternatively, the heat sink comprises ambient air, although with suitable ducting etc. the heated air (heated by the combustion process) can be fed into a ducted hot air heating supply. Additionally or alternatively, the duct mans may comprise an exhaust port through which the forced air can be exhausted to atmosphere. In certain embodiments, the exhaust port may be selectively connectable, in use, to a ducted hot air heating system.

The heat transfer liquid suitably comprises water, or a water-based solution (e.g. water plus any one or more of the group comprising: an antifreeze, a corrosion inhibitor and a heat capacity altering additive). The use of a water-based heat transfer liquid is often indicated for health and safety reasons, as well as for ease of maintenance and repair.

Various embodiments of the invention shall now be described, by way of example only, with reference to the accompanying drawings in which:
Figure 1 is a schematic side view of a first embodiment of the invention operating in a first mode;
Figure 2 is a schematic side view of the embodiment of Figure 1 operating in a second mode;
Figure 3 is an embodiment of the invention of Figure 1 operating a third mode;
Figure 4 is a schematic side view of a heat recovery system;
Figure 5 is a schematic side view of a second embodiment of the invention.

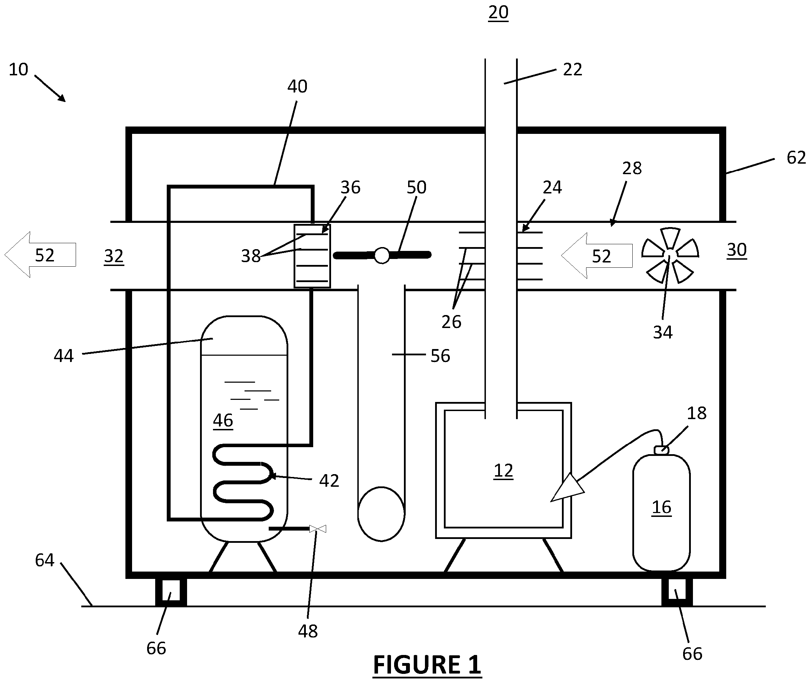

Referring to Figures 1, 2 and 3 of the drawings, a field incinerator 10 comprises a combustion chamber 12 into which waste to be disposed of (not shown) is placed. The waste (not shown) is ignited by an ignitor 14, which is fuelled by a fuel (e.g. gas or diesel) supply 16 via a suitable regulator/control valve 18. Typically, the combustion chamber 12 is pre-heated using the ignitor to get it up to a temperature at which waste products (not shown) will burn easily. During the combustion process, flue gases are exhausted to the atmosphere 20 via a flue pipe 22 which provides a conduit between the interior of the combustion chamber 12 and the atmosphere 20. Waste (not shown) can therefore be placed inside the combustion chamber 12 and burnt, with combustion products being vented to atmosphere 20 via the flue 22.

A secondary combustion chamber (not shown) may be provided to re-heat the combustion products inside the flue to neutralise potentially harmful waste gasses or combustion by-products.

The field incinerator 10 comprises a primary gas-to-gas heat exchanger 24 which comprises a series of fins 26 that are welded to the exterior of the flue 22. The primary heat exchanger 24 is located within a duct 28 having an inlet 30 and an exhaust port 32 located on opposite sides of the primary heat exchanger 24. Air from the atmosphere 20 is forced through the duct 28 by an air blower 34, which is powered by an electrical power source (not shown), for example. Air is thus drawn into the duct 28 via the inlet and is blown over the fins 26 of the primary heat exchanger 24 thereby recovering at least some of the heat from the flue 22. Because the primary heat exchanger 24 is a gas-to-gas heat exchanger, it is possible to extract heat from the flue 22 without the air inside the duct 28 mixing with the combustion products within the flue 22.

A secondary heat exchanger 36 is also located inside the duct 28 downstream of the primary heat exchanger 24. The secondary heat exchanger also comprises a series of fins 38, which are heated by the now-heated air 52 within the duct 28 blown by the blower 34. The secondary heat exchanger 36 is cooled by a closed-loop water cooling circuit 40, which recovers heat from the secondary heat exchanger 36 and which rejects it via a set of coils 42 located inside a hot water tank 44 containing a quantity of water 46 to be heated.

The hot water tank 44 can be filled by an inlet pipe (not shown) and heated by the coil 42 of the cooling circuit 40. Heated water 46 can be decanted from the water tank 44 via an outlet 48, as required.

It will be appreciated from the foregoing description that the heat from the combustion products within the flue 22 that would otherwise be rejected to atmosphere 20 can be at least partially recovered by the primary heat exchanger 24 and used, by the secondary heat exchanger 36 to heat a quantity of water 46 for subsequent use.

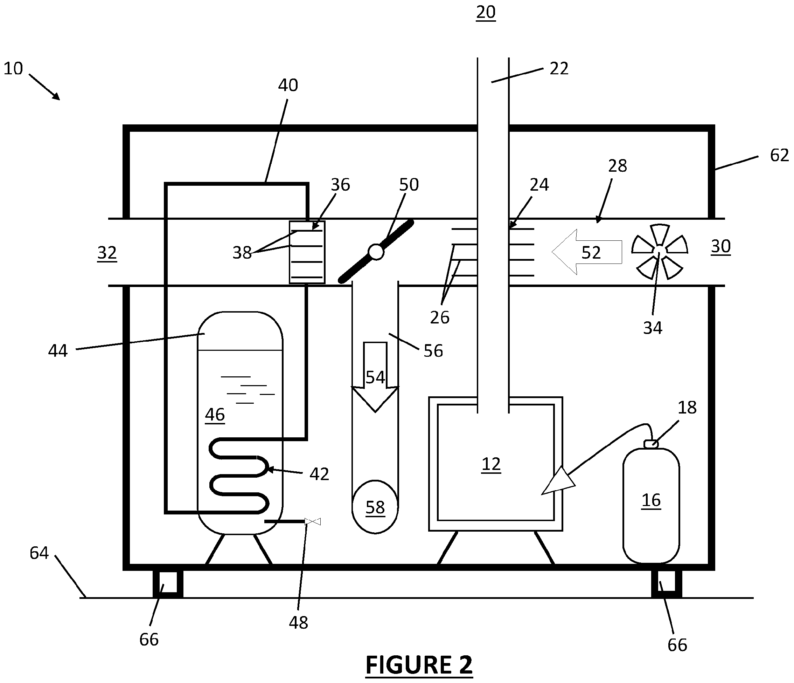

It will be appreciated that, over time, a desired water temperature 46 within the water tank 44 may be reached, in which case the secondary heat exchanger 36 may be required to be switched-out. To accomplish this, according to the invention, a baffle 50 is located within the duct 28 upstream of the secondary heat exchanger 36, which baffle 50 can be moved between a first position, as shown in Figure 1 and a second position as shown in Figure 2.

Referring now to Figure 2 of the drawings, the air flow 52 is now diverted 54 by the baffle 50 into an outlet limb 56 of the duct 28. The outlet limb 56 comprises a secondary exhaust port 58, through which the diverted air flow 54 is exhausted to atmosphere 20. It will be appreciated that with the baffle 50 in the second position, that the flow of forced air 52 is now diverted away from the secondary heat exchanger 36. Now, therefore, the primary heat exchanger 24 recovers at least some of the heat from the combustion products within the flue 22 (which may be useful, in certain situations, to cool the flue 22) and exhaust the heat via the secondary exhaust port 58 to atmosphere 20, rather than via the main exhaust port 32 after having interacted with the secondary heat exchanger. This configuration usefully enables the secondary heat exchanger 36 to be switched out of the system, for example when the desired water temperature 46 within the water tank 44 has been reached.

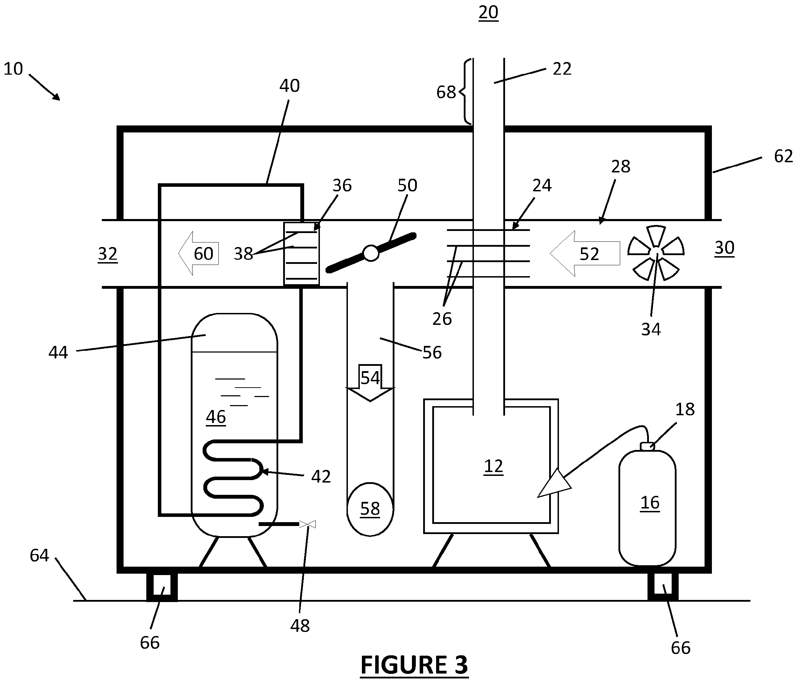

Turning now to Figure 3 of the drawings, it can be seen that the baffle 50 is now in an intermediate position between the first position shown in Figure 1 of the drawings, and the second position shown in Figure 2 of the drawings. In this situation, the forced air flow 52 is split into a first portion 54 that is exhausted by the secondary exhaust port 58 to atmosphere 20; and a second portion 60 passes through the secondary heat exchanger 36 and is vented to atmosphere 22 via the main exhaust port 32 of the duct 28. In this situation, heat recovered from the flue 22 is partially diverted away from, and partially diverted towards, the secondary heat exchanger 36, thereby enabling a reduced heating rate of the water 46 within the water tank 44 to be obtained.

It will be noted from Figures 1, 2 and 3 of the drawings that the field incinerator system 10 is containerised that is to say being housed within a bulk transport container (for example, an ISO container) 62, which is supported off the ground 64 on feet 66. The primary advantage of containerising the field incinerator 10 is that it can be readily transported to site, for example by road, rail or sea, with relative ease and it provides a robust enclosure for the components of the field incinerator 10 previously described. Conveniently, the flue 22 is formed from a number of nested sections, which enable the part 68 of the flue 22 extending above the roofline of the container 62 to be removed for transportation and storage purposes. However, when the container 62 has been moved to a desired location, the flue stack 22 can be reassembled with an upper part 68 protruding above the roofline of the container 62.

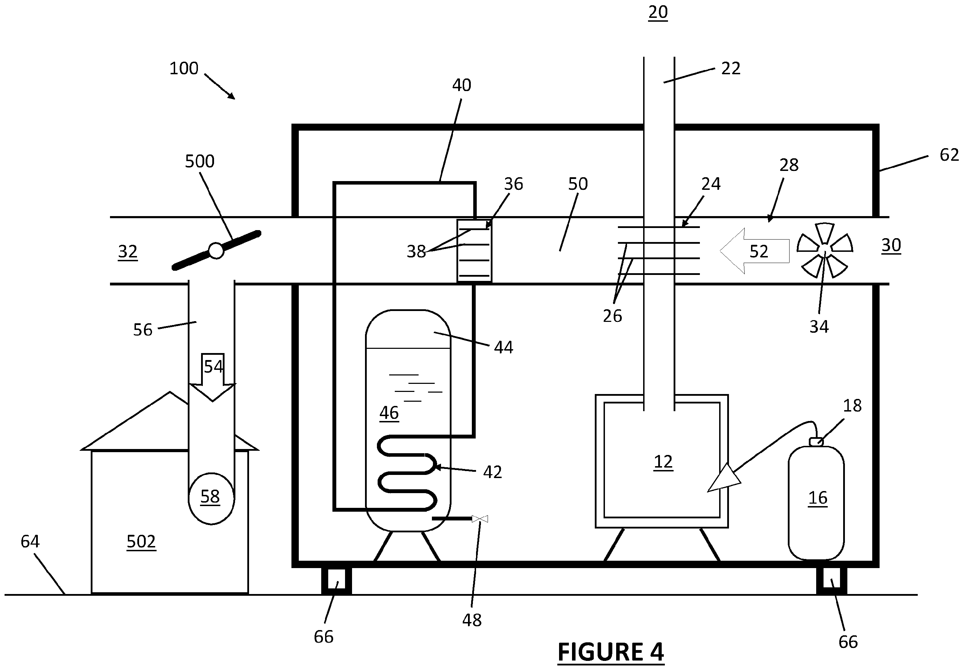

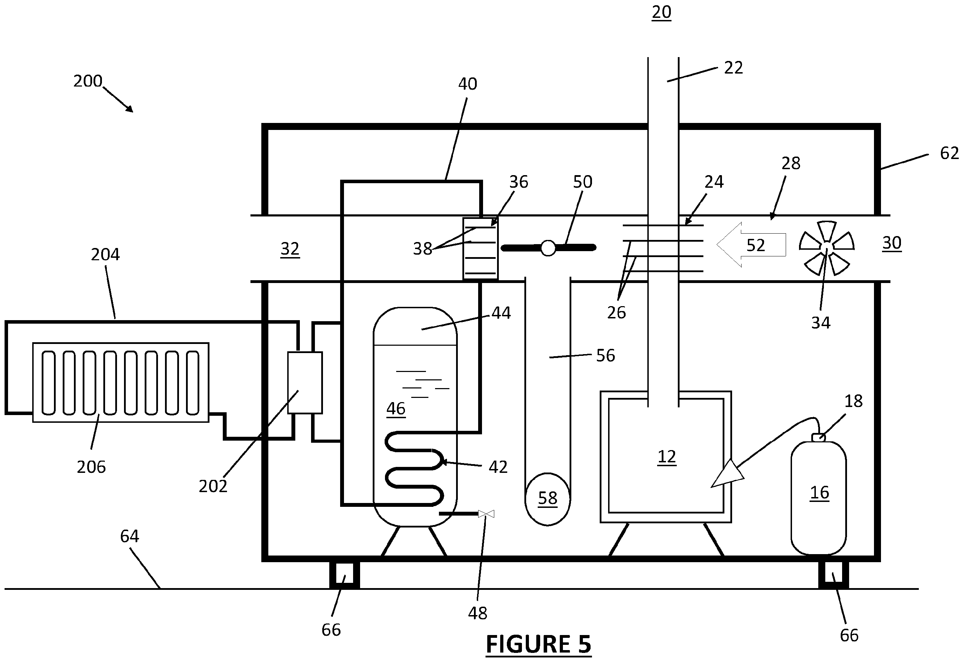

Other embodiments are shown in Figures 4 (not according to the invention) and 5 (according to the invention) of the drawings, which share many of the features of the embodiment shown in Figures 1, 2 and 3 referred to previously. To avoid repetition, identical features have been identified by identical reference signs in Figures 4 and 5.

The main difference between the field incinerator 100 shown in Figure 4 of the drawings and that shown in Figures 1, 2 and 3 of the drawings, is the location of the baffle 500, which now is now located downstream of the secondary heat exchanger 36. This configuration enables the forced air 52 within the duct 28 to be exhausted continuously to the main exhaust port 32 of the duct 28. In other words, forced air flow 52 passes through the primary heat exchanger 24 and a secondary heat exchanger 36 at all times thereby providing continuous heating of the water 46 within the tank 44 at all times the blower 34 is in operation. In this system, the amount of heat recovery is controlled by the speed of the blower 34: higher flow rates 52 leading to greater heat recovery rates from the flue 22, and vice-versa, as will be readily appreciated by the skilled reader.

In the system shown in Figure 4 of the drawings, the baffle 500 can be moved between first, second and intermediate positions (similar to those shown in Figures 1, 2 and 3 of the drawings, to deflect selected proportions of the forced air 54 into a ducted hot air heating system (not shown) in accommodation units, tenting, buildings 502, etc. and this may enable the field incinerator 100 to be used to heat such accommodation units 502, as required.

Referring now to Figure 5 of the drawings, which shows a second embodiment of a field incinerator 200 in accordance with the invention, a configuration very similar to that shown in relation to Figures 1, 2 and 3 above further comprises a tertiary, water-to-water heat exchanger 202, which can be connected in-series, or in parallel, with the closed loop cooling circuit 40 described previously. In this particular configuration, heat recovered from the flue 22 by the primary heat exchanger 24 can be used to heat a supply of hot water 46, or water in a central heating circuit 204 comprising one or more radiators 206. The flow of water in the primary circuit 40 can be controlled using valves (not shown for simplicity) to enable the ratio of water 46 heating and radiator 206 heating to be controlled at will.

It will be appreciated that the embodiments of the invention shown in Figures 1 to 3 and 5 of the drawings are merely exemplary and that other combinations and/or permutations of the features described could be used to suit different applications. For example, may be desirable to provide a wet central heating system 204, 206 rather than a hot water system 40, 44, in which case the secondary heat exchanger 36 will be connected directly to the central heating circuit 204 and not to a hot water heating circuit 40 as described herein. Furthermore, not in accordance with the invention, it may be possible to position the baffle 50 shown in Figure 5 of the drawings and the secondary limb 56 of the duct 28 downstream of the exhaust port 32 in a manner similar to that shown in Figure 4 of the drawings. Other combinations and permutations will be readily apparent to the skilled reader.

## Claims

1. An incinerator (10) comprising:
a combustion chamber (12) and a flue in fluid (22) communication with the combustion chamber (12);
a primary gas-to-gas heat exchanger (24) associated with the flue (22);
a secondary gas-to-liquid heat exchanger (36);
means (34) for forcing a supply of air (52) through the primary (24) and secondary (36) heat exchangers; and
a heat sink (46, 202, 206) adapted, in use, to capture heat from the secondary heat exchanger (36), **characterised in that**:
the means for forcing the supply of air comprises duct means (28) providing a conduit between the primary (24) and secondary (36) heat exchangers; and
wherein the duct means (28) comprises an outlet limb (56) and a diverter valve, baffle (50) or deflector adapted, in use, for selectively diverting desired proportions of the supply of forced air (52) towards, or away from, the secondary heat exchanger (36) and into the outlet limb (56).

2. The incinerator (10) of claim 1, wherein the primary heat exchanger (24) comprises a hot side through which flue gasses are configured, in use, to pass, and a cold side through which the supply or air (52) is forced, and, wherein the secondary heat exchanger (36) comprises a hot side though which, in use, the supply of air (52) is forced and a cold side through which, in use, a heat transfer liquid is arranged to pass.

3. The incinerator (10) of claim 1 or claim 2, wherein the means for forcing the supply of air (52) through the primary (24) and secondary (36) heat exchangers comprises an air blower, whose speed is optionally selectively adjustable, and which is configured to force ambient air into an inlet of a cold side of the primary heat exchanger (24).

4. The incinerator (10) of any preceding claim, wherein the duct means provides a conduit for the forced air between an outlet of the cold side of the primary heat exchanger and inlet of the hot side of the secondary heat exchanger.

5. The incinerator (10) of any preceding claim, wherein a cold side of the secondary heat exchanger (36) is operatively connected in-series with a closed-loop cooling circuit (40) containing a or the heat transfer liquid.

6. The incinerator (10) of claim 5 further comprising a tertiary heat exchanger (202), comprising a water-to-water heat exchanger thermally coupling the closed-loop cooling circuit (40) to a tertiary cooling circuit (204).

7. The incinerator (10) of claim 5 or claim 6, wherein the heat sink comprises a hot water cylinder (44) through which part of the closed-loop (42) or tertiary cooling circuit (204) passes.

8. The incinerator (10) of claim 7, wherein the hot water cylinder (44) comprises means (48) for decanting heated water from the hot water cylinder (44), as desired.

9. The incinerator (10) of any of claims 5 to 8, wherein the closed-loop or tertiary cooling circuit (204) is adapted to form part of a central heating system comprising one or more radiators (206).

10. The incinerator (10) of any of claims 5 to 9, wherein the heat transfer liquid comprises any one or more of the group comprising: water; antifreeze; corrosion inhibitor; and a heat capacity altering additive.

11. The incinerator (10) of any preceding claim, further comprising a ducted hot air heating system operatively connected to an outlet (32) of the duct means (28).

12. The incinerator (10) of any preceding claim, wherein the combustion chamber (12) comprises an ignitor.

13. The incinerator (10) of any preceding claim, wherein the flue (221) comprises a secondary combustion chamber or re-heat chamber.

14. The incinerator (10) of any preceding claim, which is **characterised by** comprising a bulk transport container forming a housing (62) at least partially enclosing one or more components of the incinerator.

15. The containerised incinerator (10) of claim 14, wherein the flue (22) comprises a plurality of nested sections, at least one of which nested sections can be removed such that the upper part of the flue (12) is within the envelope of the bulk transport container (62).

## Patentansprüche

1. Verbrennungsanlage (10), die Folgendes umfasst:
eine Brennkammer (12) und einen Rauchabzug (22) in Fluidverbindung mit der Brennkammer (12);
einen mit dem Rauchabzug (22) assoziierten primären Gas-Gas-Wärmetauscher (24);
einen sekundären Gas-Flüssigkeit-Wärmetauscher (36);
ein Mittel (34) zum Zwingen einer Zufuhr von Luft (52) durch den primären (24) und den sekundären (36) Wärmetauscher; und
eine Wärmesenke (46, 202, 206), die dazu angepasst ist, im Einsatz Wärme von dem sekundären Wärmetauscher (36) aufzunehmen, **dadurch gekennzeichnet, dass**:
das Mittel zum Zwingen der Zufuhr von Luft ein Kanalmittel (28) umfasst, das eine Leitung zwischen dem primären (24) und dem sekundären (36) Wärmetauscher bereitstellt; und
wobei das Kanalmittel (28) einen Auslasszweig (56) und ein Umleitventil, eine Prallplatte (50) oder ein Umlenkelement umfasst, das bzw. dazu angepasst ist, im Einsatz gewünschte Anteile der Zufuhr von Zwangsluft (52) selektiv in Richtung des sekundären Wärmetauschers (36) oder davon weg und in den Auslasszweig (56) umzulenken.

2. Verbrennungsanlage (10) nach Anspruch 1, wobei der primäre Wärmetauscher (24) Folgendes umfasst: eine warme Seite, wobei im Einsatz Abgase dazu konfiguriert sind, dadurch hindurch zu laufen, und eine kalte Seite, durch die die Zufuhr von Luft (52) gezwungen wird, und wobei der sekundäre Wärmetauscher (36) Folgendes umfasst: eine warme Seite, durch die im Einsatz die Zufuhr von Luft (52) gezwungen wird, und eine kalte Seite, wobei im Einsatz eine Wärmeübertragungsflüssigkeit dazu angeordnet ist, dadurch hindurch zu laufen.

3. Verbrennungsanlage (10) nach Anspruch 1 oder Anspruch 2, wobei das Mittel zum Zwingen der Zufuhr von Luft (52) durch den primären (24) und den sekundären (36) Wärmetauscher ein Luftgebläse umfasst, dessen Drehzahl optional selektiv verstellbar ist und das dazu konfiguriert ist, Umgebungsluft in einen Einlass einer kalten Seite des primären Wärmetauschers (24) zu zwingen.

4. Verbrennungsanlage (10) nach einem der vorangehenden Ansprüche, wobei das Kanalmittel eine Leitung für die Zwangsluft zwischen einem Auslass der kalten Seite des primären Wärmetauschers und einem Einlass der warmen Seite des sekundären Wärmetauschers bereitstellt.

5. Verbrennungsanlage (10) nach einem der vorangehenden Ansprüche, wobei eine kalte Seite des sekundären Wärmetauschers (36) mit einem eine oder die Wärmeübertragungsflüssigkeit enthaltenden geschlossenen Kühlkreislauf (40) in Reihenschaltung verbunden ist.

6. Verbrennungsanlage (10) nach Anspruch 5, ferner umfassend einen tertiären Wärmetauscher (202), umfassend einen Wasser-Wasser-Wärmetauscher, der den geschlossenen Kühlkreislauf (40) an einen tertiären Kühlkreislauf (204) thermisch koppelt.

7. Verbrennungsanlage (10) nach Anspruch 5 oder Anspruch 6, wobei die Wärmesenke einen Warmwasserspeicher (44) umfasst, durch den ein Teil des geschlossenen (42) oder des tertiären Kühlkreislaufs (204) läuft.

8. Verbrennungsanlage (10) nach Anspruch 7, wobei der Warmwasserspeicher (44) ein Mittel (48) zum Ablassen von erwärmtem Wasser aus dem Warmwasserspeicher (44) nach Bedarf umfasst.

9. Verbrennungsanlage (10) nach einem der Ansprüche 5 bis 8, wobei der geschlossene oder der tertiäre Kühlkreislauf (204) dazu angepasst ist, einen Teil eines einen oder mehrere Heizkörper (206) umfassenden Zentralheizungssystems zu bilden.

10. Verbrennungsanlage (10) nach einem der Ansprüche 5 bis 9, wobei die Wärmeübertragungsflüssigkeit eines oder mehrere der Gruppe umfasst, die Folgendes umfasst: Wasser, Frostschutzmittel, Korrosionshemmer und einen die Wärmekapazität ändernden Zusatzstoff.

11. Verbrennungsanlage (10) nach einem der vorangehenden Ansprüche, ferner umfassend ein kanalgeführtes Warmluftheizsystem, das mit einem Auslass (32) des Kanalmittels (28) wirksam verbunden ist.

12. Verbrennungsanlage (10) nach einem der vorangehenden Ansprüche, wobei die Brennkammer (12) eine Zündvorrichtung umfasst.

13. Verbrennungsanlage (10) nach einem der vorangehenden Ansprüche, wobei der Rauchabzug (221) eine sekundäre Brennkammer oder eine Nacherwärmungskammer umfasst.

14. Verbrennungsanlage (10) nach einem der vorangehenden Ansprüche, die **dadurch gekennzeichnet ist, dass** sie einen Massengut-Transportcontainer umfasst, der ein Gehäuse (62) bildet, das eine oder mehrere Komponenten der Verbrennungsanlage mindestens teilweise umschließt.

15. Containerisierte Verbrennungsanlage (10) nach Anspruch 14, wobei der Rauchabzug (22) eine Vielzahl von geschachtelten Abschnitten umfasst, wobei mindestens einer der geschachtelten Abschnitte entfernt werden kann, sodass der obere Teil des Rauchabzugs (12) innerhalb der Umgrenzungslinie des Massengut-Transportcontainers (62) liegt.

## Revendications

1. Incinérateur (10) comprenant :
une chambre de combustion (12) et un carneau (22) en communication fluidique avec la chambre de combustion (12) ;
un échangeur de chaleur gaz-gaz primaire (24) associé au carneau (22) ;
un échangeur de chaleur gaz-liquide secondaire (36) ;
un moyen (34) pour forcer une alimentation d'air (52) à travers les échangeurs de chaleur primaire (24) et secondaire (36) ; et
un dissipateur de chaleur (46, 202, 206) adapté, en service, pour capturer la chaleur provenant de l'échangeur de chaleur secondaire (36), **caractérisé en ce que** :
le moyen pour forcer l'alimentation d'air comprend un moyen de conduit (28) fournissant un conduit entre les échangeurs de chaleur primaire (24) et secondaire (36) ; et
dans lequel le moyen de conduit (28) comprend un membre de sortie (56) et un inverseur, une chicane (50) ou un déflecteur adapté, en service, pour dévier sélectivement des proportions souhaitées de l'alimentation d'air forcé (52) vers l'échangeur de chaleur secondaire (36), ou à l'écart de celui-ci, et jusque dans le membre de sortie (56).

2. Incinérateur (10) selon la revendication 1, dans lequel l'échangeur de chaleur primaire (24) comprend un côté chaud à travers lequel les gaz de carneau, en service, sont censés passer, et un côté froid à travers lequel l'alimentation d'air (52) est forcée, et, dans lequel l'échangeur de chaleur secondaire (36) comprend un côté chaud à travers lequel, en service, l'alimentation d'air (52) est forcée et un côté froid à travers lequel, en service, un liquide de transfert de chaleur est censé passer.

3. Incinérateur (10) selon la revendication 1 ou la revendication 2, dans lequel le moyen pour forcer l'alimentation d'air (52) à travers les échangeurs de chaleur primaire (24) et secondaire (36) comprend une soufflerie à air, dont la vitesse est optionnellement sélectivement réglable, et qui est configurée pour forcer de l'air ambiant jusque dans une entrée d'un côté froid de l'échangeur de chaleur primaire (24).

4. Incinérateur (10) selon n'importe quelle revendication précédente, dans lequel le moyen de conduit fournit un conduit pour l'air forcé entre une sortie du côté froid de l'échangeur de chaleur primaire et une entrée du côté chaud de l'échangeur de chaleur secondaire.

5. Incinérateur (10) selon n'importe quelle revendication précédente, dans lequel un côté froid de l'échangeur de chaleur secondaire (36) est raccordé opérationnellement en série à un circuit de refroidissement en boucle fermée (40) contenant un ou le liquide de transfert de chaleur.

6. Incinérateur (10) selon la revendication 5 comprenant en outre un échangeur de chaleur tertiaire (202), comprenant un échangeur de chaleur eau-eau couplant thermiquement le circuit de refroidissement en boucle fermée (40) à un circuit de refroidissement tertiaire (204).

7. Incinérateur (10) selon la revendication 5 ou la revendication 6, dans lequel le dissipateur de chaleur comprend un cylindre d'eau chaude (44) à travers lequel passe une partie de la boucle fermée (42) ou du circuit de refroidissement tertiaire (204).

8. Incinérateur (10) selon la revendication 7, dans lequel le cylindre d'eau chaude (44) comprend un moyen (48) pour décanter l'eau chauffée provenant du cylindre d'eau chaude (44), ainsi qu'il est souhaité.

9. Incinérateur (10) selon l'une quelconque des revendications 5 à 8, dans lequel la boucle fermée ou le circuit de refroidissement tertiaire (204) est adapté pour faire partie d'un système de chauffage central comprenant un ou plusieurs radiateurs (206).

10. Incinérateur (10) selon l'une quelconque des revendications 5 à 9, dans lequel le liquide de transfert de chaleur comprend n'importe lequel ou lesquels des liquides du groupe comprenant : eau; antigel ; inhibiteur de corrosion ; et additif de modification de capacité thermique.

11. Incinérateur (10) selon n'importe quelle revendication précédente, comprenant en outre un système de chauffage à air chaud canalisé raccordé opérationnellement à une sortie (32) du moyen de conduit (28).

12. Incinérateur (10) selon n'importe quelle revendication précédente, dans lequel la chambre de combustion (12) comprend un allumeur.

13. Incinérateur (10) selon n'importe quelle revendication précédente, dans lequel le carneau (221) comprend une chambre de combustion secondaire ou chambre de réchauffage.

14. Incinérateur (10) selon n'importe quelle revendication précédente, **caractérisé en ce qu'**il comprend un conteneur de transport en vrac formant un boîtier (62) enfermant au moins partiellement un ou plusieurs composants de l'incinérateur.

15. Incinérateur conteneurisé (10) selon la revendication 14, dans lequel le carneau (22) comprend une pluralité de sections emboîtées, au moins une de ces sections emboîtées pouvant être retirée de telle sorte que la partie supérieure du carneau (12) réside dans l'enveloppe du conteneur de transport en vrac (62).
